# EUROPEAN PATENT SPECIFICATION

(11) **EP 2 851 910 B1**
(45) Date of publication and mention of the grant of the patent: **04.12.2019**
(21) Application number: 13787741.1
(22) Date of filing: 07.05.2013
(51) Int. Cl.: H01F 1/20, B22F 1/00, B22F 1/02, B22F 9/22, B22F 9/26, C22C 38/00, H01F 1/24, H01F 1/33, B82Y 30/00, C22C 19/07, C22C 33/02, C22C 38/06, C22C 38/10, H01F 1/147, H01F 1/26, H01F 3/08, H01F 1/00, H01F 17/04, H01Q 7/08, H01Q 9/04

(54) **METAL POWDER AND ITS USE**
METALPULVER UND DESSEN VERWENDUNG
POUDRE MÉTALLIQUE ET UTILISATION DE CELLE-CI

(30) Priority: 10.05.2012 JP 2012108876
(43) Date of publication of application: 25.03.2015
(73) Proprietor: DOWA Electronics Materials Co., Ltd., Chiyoda-ku Tokyo 101-0021 (JP)
(72) Inventor: GOTOH, Masahiro, Tokyo 101-0021 (JP); YOSHIDA, Takayuki, Tokyo 101-0021 (JP); IKARI, Kazumasa, Tokyo 101-0021 (JP)
(74) Representative: Müller-Boré & Partner Patentanwälte PartG mbB
(86) International application number: PCT/JP2013/002942
(87) International publication number: WO 2013/168411

(56) References cited:
- EP-A2- 1 318 527
- EP-A2- 1 318 527
- JP-A- 2001 192 211
- JP-A- 2006 128 535
- JP-A- 2006 190 842
- JP-A- 2006 190 842
- JP-A- 2010 251 697
- US-A1- 2004 089 564
- US-A1- 2010 035 087
- US-A1- 2010 060 539

## Description

The present invention relates to a metal powder and the use of the metal powder for forming an inductor or antenna.

In recent years, signals used in electronic devices such as mobile phones, notebook PCs, and liquid crystal television sets are being increased in frequency. At present, signals in a GHz band have already been practically used, and it is expected that a frequency band higher than 10 GHz will be used in the future. As the frequencies of the devices increase, individual parts such as electronic circuits and other passive elements are also required to be improved in performance in a high-frequency region.

These devices are being reduced in size and power consumption for the purpose of use as mobile devices. Therefore, individual parts are required to have characteristics in a high-frequency band and to be reduced in losses in the high-frequency band. However, among the parts constituting such devices, passive elements generally have characteristics determined by the physical properties of their materials, and it is not easy to improve the characteristics in a high-frequency band.

For example, the product characteristics of a magnetic part such as an inductor or an antenna are determined by its physical properties such as dielectric constant and magnetic permeability. An inductor is a part that utilizes a magnetic flux flowing through the main body of the part. To obtain an inductor usable in a high-frequency band, a magnetic material not only having a magnetic permeability in a high-frequency region but also reduced in losses in the high-frequency region must be developed.

As for antennas, there is an increasing need to install an antenna supporting a plurality of frequency bands, as a communication method or technology advances. It is desirable that the area occupied by an antenna in an electronic device be as small as possible. It is known that the length of an antenna suitable for receiving a prescribed frequency is inversely proportional to the one-half power of the product of the real part of the magnetic permeability and the real part of the dielectric constant. Specifically, to reduce the length of an antenna, a magnetic material having a high magnetic permeability in the frequency range used must be developed. In addition, since it is most important for an antenna that losses be small, a magnetic material with small losses in a high-frequency range is required.

At present, magnetic iron oxides typified by ferrite and magnetic metal materials such as iron and alloys thereof (these materials are hereinafter referred to as "conventional magnetic materials") are used as the magnetic materials for the above inductors and antennas. However, since losses caused by such magnetic materials increase in a high-frequency range of 100 MHz or higher, these conventional magnetic materials have a problem in that they cannot be used preferably in the high-frequency region. This may be because of the following. In the conventional magnetic materials, since their particle diameters are larger than the size of magnetic domains, the magnetic domain walls move when the magnetization is inverted, so that a large hysteresis loss occurs. In addition, since the particle diameters are equal to or larger than the skin depth, a large eddy current loss occurs.

In view of the above circumstances, Patent Literature 1 proposes nanometer-order flat particles as magnetic metal particles used for antennas.

US 2010/0035087 A1 discloses a process for producing ferromagnetic metal particles and magnetic recording medium. JP 2006-190842 A discloses a magnetic metal powder and a magnetic recording medium using the same.

US 2010/0060539 A1 discloses a core-shell magnetic material, a method of manufacturing core-shell magnetic material, a device, and an antenna device.

Patent Literature 1: Japanese Patent Application Laid-Open No. 2010-103427

Although losses in a magnetic part using the magnetic metal particles in Patent Literature 1 are smaller than those when the conventional magnetic materials are used, the value of tan δ representing a loss at 1 GHz is 0.18(see paragraph [0104] in Patent Literature 1). Therefore, it is desirable to use a material with a smaller loss.

Accordingly, it is an object of the present invention to provide a magnetic material that can maintain a high magnetic permeability and low losses even in a high-frequency region of 1 GHz or higher and is advantageous to constitute a magnetic part having favorable characteristics even in conventionally used kHz and MHz bands. It is also an object to provide a magnetic part obtained by using the powder.

The above-described problems can be solved by forming a magnetic part using a metal powder having a specific structure.

More specifically, the present invention and embodiments thereof are defined in the claims.

According to the metal powder of the present invention, a magnetic part with a small loss can be obtained in which, at 1 GHz, the real part µ' of the magnetic permeability is more than 1.5 and the loss factor is less than 0.05, in which, at 3 GHz, µ' is more than 1.5 and the loss factor is less than 0.1, and in which, at 5 GHz, µ' is more than 1.5 and the loss factor is less than 0.3.
Fig. 1 is a diagram exemplifying the configuration of an antenna, which is a magnetic part.
Fig. 2 is a diagram exemplifying the configuration of a coil part, which is a magnetic part.
Fig. 3 is a TEM photograph of a metal powder according to the present invention.
Fig. 4 is a TEM photograph of a metal powder according to the present invention.

The magnetic part, the metal powder used for the magnetic part, and the method for manufacturing the metal powder will next be described.

The magnetic part is formed from a compact obtained by compression molding of the metal powder. Particularly, an antenna and a coil part are exemplified as the magnetic part.

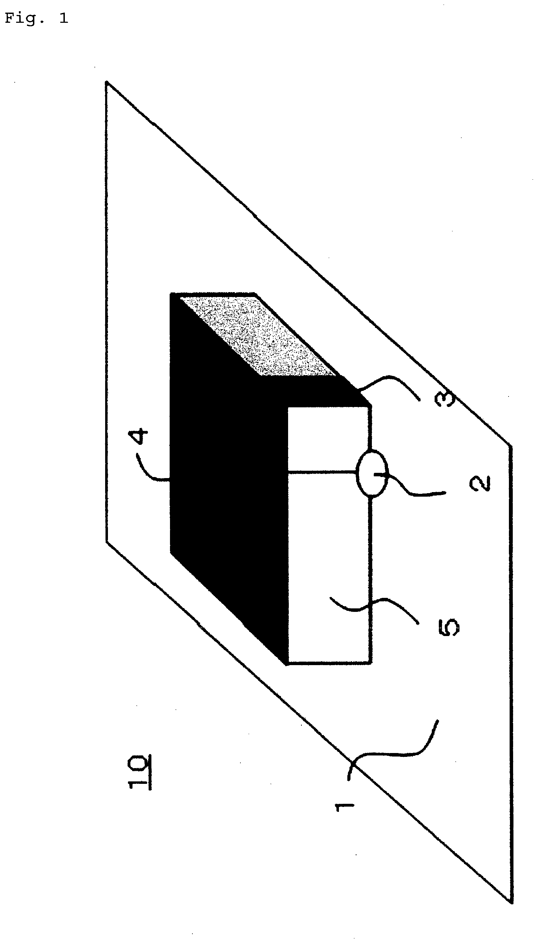

Fig. 1 is a diagram showing an exemplary antenna to which a magnetic material for high frequency use is applied. The antenna 10 shown includes a conductor plate 1, an emission plate 4 disposed thereon, a feeding point 2 for feeding power to the emission plate, and a shorting plate 3. The antenna 10 has a structure in which a compact 5 formed of the magnetic metal powder is sandwiched between the conductor plate 1 and the emission plate 4. With the above structure, wavelength shortening is obtained, and therefore the antenna 10 can be reduced in size.

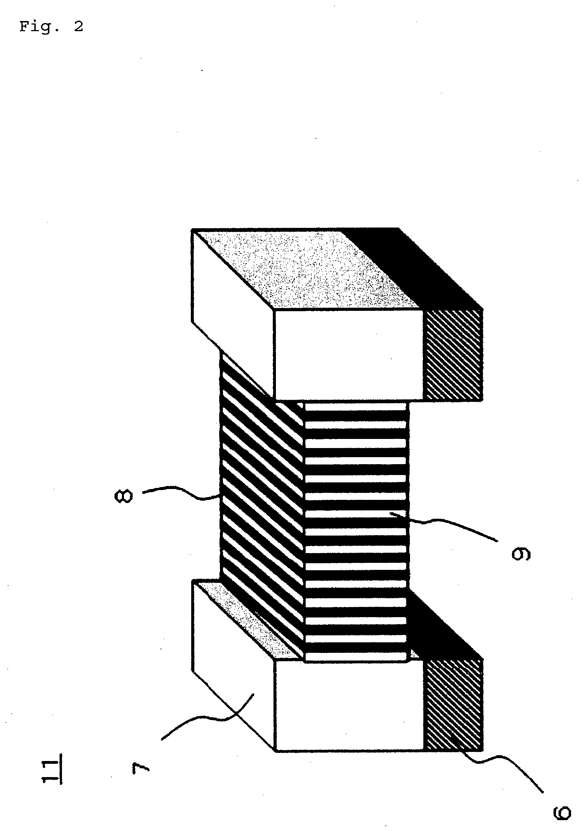

Fig. 2 is a diagram showing an exemplary coil part formed using a magnetic material for high frequency use. The coil part 11 shown includes electrodes 6, flanges 7, a winding 8, and a core 9. The core 9 is a compact of a metal powder and is an elongated columnar rectangular parallelepiped, and its cross section in a short axis direction of the rectangular parallelepiped has a rectangular shape. Each flange 7 has a rectangular parallelepipedic structure in which its rectangular cross section is larger than the rectangular cross section of the core 9 and the thickness of the flange 7 in the long axis direction of the winding 9 is small. Each flange 7 may also be formed from a compact of the magnetic metal powder.

Next, the metal powder of the present invention will be described in detail.

### <Composition of metal powder>

The metal powder of the present invention contains Fe (iron) or Fe and Co (cobalt) and further contains at least one of rare earth elements (including Y (yttrium)), Al (aluminum), Si (silicon), and Mg (magnesium) (hereinafter the at least one element is referred to as "Al etc.").

The content of the rare earth element (including Y (yttrium), the same applies hereinafter), i.e., the content of the rare earth element with respect to the total amount of Fe and Co, is within the range of 10 at% or less. A method for manufacturing the metal powder of the present invention includes a precursor forming step for forming a precursor, a precursor reducing step, and a gradual oxidizing step, as described later. In the precursor forming step, the axial ratio (= the major axis length / the minor axis length) of metal particles finally obtained can be changed by changing the amount of rare earth elements including Y in an aqueous solution containing elements used as raw materials.

When the amount of rare earth elements is small, the axial ratio becomes large and a metal powder in which losses are further reduced can be obtained. However, when the amount of rare earth elements is too small, magnetic permeability decreases. When the amount of rare earth elements is large, the axial ratio becomes small, and the losses become slightly large. However, the magnetic permeability is larger than that when no rare earth elements are contained. When the content of rare earth elements is appropriate, a metal powder with proper losses and proper magnetic permeability and usable in the conventional kHz to GHz band can be obtained.

The range of the content of the elements suitable for maintaining the balance between the characteristics as described above, i.e., the content of rare earth elements with respect to the total amount of Fe and Co, is preferably 0 at% to 10 at% and more preferably 0 at% to 5 at%. The rare earth element used is particularly preferably Y or La.

As for the content of Al etc., the content of Al etc. with respect to the total amount of Fe and Co is within the range of 20 at% or less. The precursor before reducing treatment is a solid solution of Al etc. in Fe or Fe and Co, and then this precursor is reduced to form a metal powder. In the reduced metal powder, Fe and Co that can be easily reduced are mainly present inside the particles, and aluminum oxide etc. that are not reduced are mainly present on the surfaces of the particles.

Then the surface of the metal powder is strongly oxidized to form an insulating film containing Al etc. The electric resistance of the particles constituting the metal powder is thereby increased, and losses due to eddy current loss etc. in a magnetic part to be manufactured are improved. When the amount of Al contained is increased, an oxide film containing a large amount of Al can be formed as the outermost layer, so that the electric resistance of the particles becomes high. Therefore, the eddy current loss can be reduced, and tan δ becomes small. Not only Al etc. but also Fe or Fe and Co may remain on the surface. The above coating also has the function of suppressing deterioration of the magnetic properties of the magnetic powder.

When the metal powder contains Co, the content of Co, i.e., the atomic ratio of Co with respect to Fe (hereinafter referred to as a "Co/Fe atomic ratio"), is 0 to 60 at%. The Co/Fe atomic ratio is more preferably 5 to 55 at% and still more preferably 10 to 50 at%. When the Co/Fe atomic ratio is within the above range, the metal powder can easily have high saturation magnetization and stable magnetic properties.

Al etc. also have a sintering prevention effect and suppress coarsening of the particles by sintering during heat treatment. In the present description, Al etc. are treated as "sintering prevention elements." However, Al etc. are non-magnetic components, and an excessively large amount of these components is not preferred because the magnetic properties are attenuated. The content of Al etc. with respect to the total amount of Fe and Co is preferably 1 at% to 20 at%, more preferably 3 at% to 18 at%, and still more preferably 5 at% to 15 at%.

The particles according to the present invention have a core-shell structure including a core formed of a metal component and a shell formed mainly of an oxide component. Whether or not the particles have the core-shell structure can be checked from, for example, a TEM photograph, and composition analysis may be performed using a method such as ICP spectrometry, ESCA, TEM-EDX, XPS, or SIMS. Particularly, with ESCA, a change in the composition from the particle surface in a depth direction can be checked, and the core portion formed of a metal and the shell portion formed of an oxide can be distinguished from each other.

With TEM-EDX, a narrowed EDX beam is applied to a particle to perform semiquantitative analysis, and a rough composition of the particle can be determined, so that the core portion formed of a metal and the shell portion formed of an oxide can be distinguished from each other (see, for example, paragraph [0040] in Japanese Patent Application Laid-Open No. 2006-128535).

### <Manufacturing method>

The method for manufacturing the metal powder of the present invention includes a precursor forming step of forming a precursor, a precursor reducing step of reducing the obtained precursor to obtain a metal powder and a gradual oxidizing step of forming a small amount of oxide film on the surface of the metal powder after the precursor reducing step, in order to improve handleability. The precursor forming step is a wet process, and the precursor reducing step and the gradual oxidizing step are dry processes.

The precursor forming step is a step including oxidizing elements used as raw materials contained in an aqueous solution to perform oxidation reactions, whereby particles (a precursor) formed of the elements used as the raw materials are obtained.

The precursor reducing step is a step including reducing the precursor to remove oxygen added in the precursor forming step, whereby a metal powder formed of the elements used as the raw materials is obtained. The gradual oxidizing step is a step of forming a small amount of oxide film on the surface of the obtained metal powder. The nanometer-order metal powder is highly active and is easily oxidized even at room temperature. The formation of the oxide film on the surface allows the powder to be present stably even in air. Each of these steps will next be described in detail.

### <Precursor forming step>

In the precursor forming step, an aqueous solution containing divalent Fe ions is prepared. This aqueous solution is produced by neutralizing a water-soluble iron compound used as a raw material with an alkali hydroxide (such as an aqueous NaOH or KOH solution) or an alkali carbonate (such as an aqueous sodium carbonate or ammonium carbonate solution). The water-soluble iron compound used is preferably iron sulfate, iron nitrate, iron chloride, etc. and more preferably iron sulfate.

In the above reaction, a gas containing oxygen is introduced into the aqueous solution containing divalent Fe ions, or an aqueous solution of an oxidizer such as hydrogen peroxide is added to the aqueous solution containing divalent Fe ions, whereby seed crystals of iron oxyhydroxide are generated. Then the remaining divalent Fe ions are oxidized to precipitate iron oxyhydroxide on the seed crystals, and particles of iron oxyhydroxide are thereby grown.

The oxidation reaction in the growth stage proceeds by introducing air. It is particularly preferable to use a method in which hydrogen peroxide is used as the oxidizer when the seed crystals are generated and air used as the oxidizer is introduced in the growth stage.

Iron with cobalt added thereto may be used as the raw material. The cobalt raw material used is preferably a water-soluble cobalt compound. The water-soluble cobalt compound used is preferably cobalt sulfate, cobalt nitrate, or cobalt chloride and more preferably cobalt sulfate (CoSO₄).

It is preferable to add cobalt before the formation of the seed crystals, and it is more preferable to add cobalt simultaneously with the addition of the iron raw material. Cobalt may be added after completion of the oxidation reaction to cause the cobalt to adhere to the formed particles.

Preferably, the oxidation for growing the seed crystals is performed by blowing air into the aqueous solution. This is because the quantity of flow and the flow rate of air can be easily controlled and because, even when the manufacturing apparatus is increased in size, the oxidation reaction is allowed to occur uniformly in the solution by increasing the number of air outlets. The oxidation may be performed by a method including addition of an oxidizer.

In the present invention, a rare earth element (including Y) is added to iron or iron and cobalt used as the raw materials. Preferably, a water-soluble rare earth element compound is used as the rare earth element raw material. This is because the reaction of the rare earth element raw material is performed under wet conditions. When Y, for example, is used, the water-soluble Y used is preferably yttrium sulfate, yttrium nitrate, yttrium chloride, etc. and more preferably yttrium sulfate (Y₂(SO₄)₃).

The rare earth elements (including Y) are added before the formation of the seed crystals, because the shape of the particles can be easily controlled. More preferably, the rare earth elements are added simultaneously with the addition of the iron raw material. When the rare earth elements are added after completion of the oxidation reaction to cause the rare earth elements to adhere to the formed particles, sintering of the particles in the reducing step can be prevented.

In addition to iron, cobalt, and the rare earth elements, elements such as aluminum, silicon, and magnesium may be added as raw materials. Preferably, water-soluble compounds of these elements are used. Preferably, these elements are added after iron or iron and cobalt are added to a reaction vessel. These elements may be added during the oxidation reaction so as to allow them to form a solid solution in the precursor or may be added after completion of the oxidation reaction to cause these elements to adhere to the formed particles. These elements may be added at once or successively.

### <Precursor reducing step>

The precursor obtained by the wet process as described above is then processed by a dry process. In the precursor reducing step, the precursor is exposed to a reducing gas such as carbon monoxide, acetylene, or hydrogen at a temperature of 250°C to 650°C to perform thermal reduction treatment. In this case, multi-stage reduction may be performed. In the multi-stage reduction, reduction treatment in which a material to be treated is held at a prescribed temperature for a prescribed time is repeated several times at different temperatures. By appropriately controlling the holding temperature and time, the characteristics of the produced magnetic metal powder can be controlled. Preferably, a reducing gas with water vapor added thereto may be used as the atmosphere during the reduction treatment.

### <Gradual oxidizing step>

The product obtained by the thermal reduction is a magnetic alloy particle powder. If the magnetic alloy particle powder is handled in air without any treatment, the powder may be rapidly oxidized. Therefore, an oxide layer is formed in the subsequent gradual oxidizing step. The gradual oxidizing step is a step including treating the magnetic alloy particle powder at a temperature of 20 to 300°C for a prescribed time while the amount of an oxidizing gas in an inert gas is gradually increased to thereby produce an oxide layer on the surface of the particles.

Preferably, in practice, the powder after completion of reduction is cooled to a temperature at which the gradual oxidizing step is performed, and then gradual oxidation is performed at this temperature. Preferably, the oxide layer is formed on the surface of the particles at this temperature using a weakly oxidizing gas to stabilize the particles. Also in this step, water vapor may be added to the weakly oxidizing gas used for the gradual oxidizing treatment. This is preferred because the addition of water vapor allows a denser film to be formed.

### <Coating step>

When the magnetic particles manufactured by the above method are used for a high-frequency part such as an inductor or an antenna, magnetic loss and dielectric loss are important. Therefore, in some cases, it is necessary to further increase the insulation resistance of the particles. In such cases, a coating step of forming a coating around the particles may be additionally provided. The coating material may be an inorganic material such as Al₂O₃, SiO₂, MgO, or Y₂O₂ or an organic material typified by a resin.

Any coating method may be used. Examples of the coating method include: a method in which magnetic particles dispersed in a solution are coated with a metal hydroxide or the like; a method in which, after the magnetic particles are coated with a metal hydroxide or the like by the above method, the resultant magnetic particles are subjected to heat treatment to form an oxide coating; a method in which an alkoxide such as TEOS is added to a dispersion of magnetic particles to form an oxide directly around the particles; a method in which magnetic particles are coated with an insulating material in an air flow; a method in which magnetic particles and a resin are mixed to coat the magnetic particles with the resin; and a method in which, when magnetic particles and a resin are mixed, an inorganic material or an organic material is also mixed therewith to coat the magnetic particles substantially with the inorganic material or the organic material. It is preferable that the coated magnetic particles be subjected to heat treatment, because the heat treatment has the effect of further increasing the insulation resistance.

The powder characteristics and composition of the thus-obtained metal powder through the gradual oxidizing step were examined by the methods described below.

### <Major axis length, minor axis length, and axial ratio>

The major and minor axis lengths of particles were determined as follows. A plurality of photographs of bright-field images of a magnetic metal powder observed under a transmission electron microscope (JEM-100CX type Mark-II, manufactured by JEOL Ltd.) at an acceleration voltage of 100 kV (for example, magnification: 58,000X) were taken. The photographs were enlarged (for example, vertical and horizontal magnifications: 9 times). 300 Mono-dispersed particles were randomly selected from the plurality of photographs. Their major and minor axis lengths were measured, and the average values were determined.

The particles in the present invention have elongated elliptic outline shapes. Therefore, the distance between vertices of an elliptic particle in a major axis direction was used as the major axis length of the particle. The minor axis length was defined as follows. Two points on the outer circumference of the particle that are aligned in the minor axis direction were connected such that the line connecting the two points was perpendicular to the straight line connecting the two vertices used for the measurement of the major axis length. The two points were selected such that the distance therebetween became maximum, and this distance was used as the minor axis length (the major axis length and minor axis length described hereinafter are average values). The axial ratio of the particle was determined using the above determined major and minor axis lengths as the major axis length/the minor axis length.

### <BET specific surface area>

The BET specific surface area was determined by a BET method using 4-Sorb US manufactured by Yuasa Ionics Co., Ltd.

### <Evaluation of magnetic properties and weather resistance of magnetic powder>

The magnetic properties (bulk properties) of the obtained metal powder, i.e., its coercive force Hc (Oe and kA/m), saturation magnetization σs (Am²/kg), and squareness ratio SQ, were measured using a VSM device (VSM-7P) manufactured by TOEI INDUSTRY Co., Ltd. at an external magnetic field of 10 kOe (795.8 kA/m). An indicator (Δσs) for evaluating the weather resistance of a soft magnetic powder was determined as follows. The soft magnetic powder was stored in a thermo-hygrostat with a temperature setting of 60°C and a relative humidity of 90% for one week, and then the saturation magnetization σs was measured before and after storage in the thermo-hygrostat. The indicator (Δσs) was determined as (σs before storage - σs after storage) / σs before storage × 100 (%). In the present description, the magnetic moment per unit weight measured at an external magnetic field of 10 kOe is referred to as "saturation magnetization."

### <Composition analysis of metal powder particles>

The composition of the metal powder particles was determined by mass spectroscopy performed on the entire particles including the magnetic metal phase and the oxide film. Co, Al, Y, Mg, and Si were quantified using a high-frequency induction plasma emission spectrometer ICP (IRIS/AP) manufactured by Nippon Jarrell-Ash Co. Ltd. Fe was quantified using a Hiranuma automatic titrator (COMTIME-980) manufactured by Hiranuma Sangyo Corporation.

Oxygen was quantified using a NITROGEN/OXYGEN DETERMETER (type TC-436) manufactured by LECO Corporation. The quantification results were given in percent by mass. Therefore, the results were appropriately converted to atomic percent (at%) to determine the atomic ratio of Co/Fe, the atomic ratio of Al/(Fe + Co), and the atomic ratio of Y/(Fe + Co) .

### <Measurement of volume resistivity of metal particle powder>

The volume resistivity of the metal particle powder was measured as follows. 1.0 g of the powder was pressurized vertically at 13 to 64 MPa (4 to 20 kN) while a voltage of 10 V was applied to the powder. The volume resistivity was measured in this state by a dual-ring electrode method according to JIS-K6911 using a powder resistivity measurement unit (MCP-PD51) manufactured by Mitsubishi Chemical Analytech Co., Ltd., a high resistivity meter Hiresta-UP (MCP-HT450) manufactured by Mitsubishi Chemical Analytech Co., Ltd., and high resistivity powder measurement system software produced by Mitsubishi Chemical Analytech Co., Ltd.

### <Manufacturing of compact of metal powder>

The obtained metal powder was kneaded with a resin, and a compact was formed. The resin used in this case can be any known thermosetting resin. The thermosetting resin may be selected from phenolic resins, epoxy resins, unsaturated polyester resins, isocyanate compounds, melamine resins, urea resins, silicone resins, etc. The epoxy resin used may be any of mono-epoxy compounds and polyepoxy compounds or a mixture thereof.

Examples of the mono-epoxy compounds include butyl glycidyl ether, hexyl glycidyl ether, phenyl glycidyl ether, allyl glycidyl ether, para-tert-butyl phenyl glycidyl ether, ethylene oxide, propylene oxide, p-xylyl glycidyl ether, glycidyl acetate, glycidyl butyrate, glycidyl hexoate, and glycidyl benzoate.

Examples of the polyepoxy compounds include: bisphenol-type epoxy resins obtained by glycidylating bisphenols such as bisphenol A, bisphenol F, bisphenol AD, bisphenol S, tetramethylbisphenol A, tetramethylbisphenol F, tetramethylbisphenol AD, tetramethylbisphenol S, tetrabromobisphenol A, tetrachlorobisphenol A, and tetrafluorobisphenol A; epoxy resins obtained by glycidylating other bisphenols such as biphenol, dihydroxynaphthalene, and 9,9-bis(4-hydroxyphenyl)fluorene; epoxy resins obtained by glycidylating trisphenols such as 1,1,1-tris(4-hydroxyphenyl)methane and 4,4-(1-(4-(1-(4-hydroxyphenyl)-1-methylethyl)phenyl)ethylidene)bisphenol; epoxy resins obtained by glycidylating tetrakisphenols such as 1,1,2,2,-tetrakis(4-hydroxyphenyl)ethane; novolac-type epoxy resins obtained by glycidylating novolacs such as phenol novolac, cresol novolac, bisphenol A novolac, brominated phenol novolac, and brominated bisphenol A novolac; epoxy resins obtained by glycidylating polyphenols, aliphatic ether-type epoxy resins obtained by glycidylating polyhydric alcohols such as glycerin and polyethylene glycol; ether ester-type epoxy resins obtained by glycidylating hydroxycarboxylic acids such as p-oxybenzoic acid and β-oxynaphthoic acid; ester-type epoxy resins obtained by glycidylating polycarboxylic acids such as phthalic acid and terephthalic acid; compounds obtained by glycidylating amine compounds such as 4,4-diaminodiphenylmethane and m-aminophenol, glycidyl-type epoxy resins such as amine-type epoxy resins including triglycidyl isocyanurate etc., and alicyclic epoxides such as 3,4-epoxycyclohexylmethyl-3',4'-epoxycyclohexanecarboxylate.

Among the above epoxy resins, polyepoxy compounds are preferred from the viewpoint of improving storage stability. Among the polyepoxy compounds, glycidyl-type epoxy resins are preferred because of their very high productivity, and epoxy resins obtained by glycidylating polyphenols are more preferred because their cured products have high adhesion and heat resistance. Bisphenol-type epoxy resins are still more preferred, and an epoxy resin obtained by glycidylating bisphenol A and an epoxy resin obtained by glycidylating bisphenol F are particularly preferred.

Preferably, the resin is in a liquid form. In order to maintain the composition in a solid form, the epoxy equivalent of the resin is preferably 300 or more.

The mixing ratio of the soft magnetic metal powder to the epoxy resin, i.e., the mass ratio of the metal/the resin, is preferably 30/70 to 99/1, more preferably 50/50 to 95/5, and still more preferably 70/30 to 90/10. This is because, if the amount of the resin is too small, a compact cannot be formed, and, if the amount of the resin is too large, desired magnetic properties cannot be obtained.

The metal powder of the present invention can be formed into any shape by compression molding. Practically supplied products have shapes exemplified in Figs. 1 and 2. However, in the following Examples, the metal powder was molded into a donut shape, and properties as a magnetic part were evaluated.

The metal powder and an epoxy resin were weighed in a weight ratio of 80:20, and the metal powder was dispersed in the epoxy resin using a vacuum mixing-degassing mixer (V-mini300) manufactured by EME Corporation to prepare a paste. The paste was dried on a hot plate at 60°C for 2 hours to obtain a metal powder-resin complex. The complex was pulverized to produce powder of the complex. 0.2 g of the complex powder was placed in a donut-shaped container, and a load of 1 t was applied to the complex powder using a hand press to obtain a compact having a toroidal shape with an outer diameter of 7 mm and an inner diameter of 3 mm.

### <Evaluation of high-frequency characteristics of metal powder-resin complex>

The high-frequency characteristics of the obtained compact of the metal powder-resin complex were measured as follows. Specifically, the real part (µ') and imaginary part (µ") of the magnetic permeability of the complex at 0.5 to 5 GHz and tan δ representing the loss factor were measured using a network analyzer (E8362C) manufactured by Agilent Technologies, Inc. and a coaxial S parameter method sample holder kit (product type: CSH2-APC7, sample dimensions: ϕ 7.0 mm - ϕ 3.04 mm × 5 mm) manufactured by Kanto Electronic Application and Development Inc.

### Examples

### [Reference Example 1]

The precursor forming step was performed as follows. 2,600 mL of pure water and 350 mL of an ammonium carbonate solution containing ammonium carbonate in an amount corresponding to 3 equivalents of carbonic acid with respect to Fe²⁺ were added to a 5,000 mL beaker, and the mixture was stirred while temperature was maintained at 40°C using a thermostat. Then 900 mL of a solution prepared by mixing a 1 mol/L aqueous solution of ferrous sulfate (guaranteed reagent) and a 1 mol/L solution of cobalt sulfate (guaranteed reagent) in a mixing ratio of 100:20 was added to the above mixture.

After 2 mL of a 3 mol/L aqueous H₂O₂ solution was added to generate seed crystals, temperature was increased to 60°C, and air was introduced until 50% of Fe²⁺ was oxidized. Then 70 mL of 0.3 mol/L aluminum sulfate (Al₂(SO₄)₃) (guaranteed reagent) was added such that the amount of Al was 5 at% with respect to the total moles of Fe and Co, and air was introduced until oxidation was completed. Then a 0.2 mol/L solution of yttrium sulfate (guaranteed reagent) was added in such an amount that the amount of Y was 5 at% with respect to the total moles of Fe and Co to thereby cause Y to adhere to the precursor. In this manner, particles of the precursor with Co and Al forming a solid solution in Fe were obtained. The precursor was filtrated, washed with water, and dried at 110°C by routine methods to thereby obtain a dried solid of the precursor (also referred to as a precursor powder). [0079]

Next, the precursor reducing step was performed. The precursor powder with Co and Al forming a solid solution in Fe was placed in a bucket to which air could be introduced. The bucket was placed in a through-type reducing furnace, and reduction treatment was performed at 550°C for 60 minutes while hydrogen gas (H₂ gas) was introduced. After completion of the reduction treatment, a metal iron powder (magnetic metal powder) was obtained.

Then, in order to move to the gradual oxidizing step, the atmosphere in the furnace was changed from hydrogen to nitrogen, and the temperature inside the furnace was lowered to 80°C at a cooling rate of 20°C/min under the flow of nitrogen. In the gradual oxidizing step, a gas mixture of air and N₂ at a mixing ratio of air to N₂ of 1/125 was introduced into the furnace in the initial stage of formation of the oxide film so that the metal iron powder was not rapidly oxidized to thereby form the oxide film in an oxygen-nitrogen mixed atmosphere. Then the amount of oxygen supply was gradually increased to increase the oxygen concentration in the atmosphere.

The final flow rate of air supply was 1/25 with respect to the amount of N₂. In this case, the total amount of the gas introduced into the furnace was held substantially constant by controlling the flow rate of nitrogen. The gradual oxidation treatment was performed in an atmosphere maintained at about 80°C.

A final metal powder (with the surface oxide film) was obtained in the manner described above. The physical properties of the obtained magnetic metal powder and its bulk properties are shown in TABLE 2. Its volume resistivity is shown in TABLE 4, and the high-frequency characteristics of a compact using the magnetic metal powder are shown in TABLE 3. The composition of the magnetic metal powder and the conditions for the precursor reducing step and the gradual oxidizing step and also those for other Examples are shown in TABLE 1. As shown in TABLE 2, the axial ratio (= major axis length/minor axis length) of the obtained particles was 5.2.

### [Example 2]

The precursor forming step was performed as follows. 2,600 mL of pure water and 350 mL of an ammonium carbonate solution containing ammonium carbonate in an amount corresponding to 3 equivalents of carbonic acid with respect to Fe²⁺ were added to a 5,000 mL beaker, and the mixture was stirred while temperature was maintained at 40°C using a thermostat. Then 900 mL of a solution prepared by mixing a 1 mol/L aqueous solution of ferrous sulfate (guaranteed reagent) and a 1 mol/L solution of cobalt sulfate (guaranteed reagent) in a mixing ratio of 100:20 was mixed with a 0.2 mol/L solution of yttrium sulfate (guaranteed reagent) such that the amount of Y was 2.6 at% with respect to the total moles of Fe and Co. Then about 1 L of the above-obtained solution was added to the above mixture.

After 5 mL of a 3 mol/L aqueous H₂O₂ solution was added to generate seed crystals, temperature was increased to 60°C, and air was introduced until 50% of Fe²⁺ was oxidized. Then 70 mL of 0.3 mol/L aluminum sulfate (guaranteed reagent) was added such that the amount of Al was 5 at% with respect to the total moles of Fe and Co, and air was introduced until oxidation was completed. In this manner, particles of a precursor with Co and Al forming a solid solution in Fe were obtained. The precursor was filtrated, washed with water, and dried at 110°C by routine methods to thereby obtain a dried solid of the precursor (also referred to as a precursor powder).

Next, the precursor reducing step was performed. The precursor powder with Co and Al forming a solid solution in Fe was placed in a bucket to which air could be introduced. The bucket was placed in a through-type reducing furnace, and reduction treatment was performed at 550°C for 60 minutes while hydrogen gas (H₂ gas) was introduced. After completion of the reduction treatment, a metal iron powder (magnetic metal powder) was obtained.

Then, in order to move to the gradual oxidizing step, the atmosphere in the furnace was changed from hydrogen to nitrogen, and the temperature inside the furnace was lowered to 80°C at a cooling rate of 20°C/min under the flow of nitrogen. In the gradual oxidizing step, a gas mixture of air and N₂ at a mixing ratio of air to N₂ of 1/125 was introduced into the furnace in the initial stage of formation of the oxide film so that the metal iron powder was not rapidly oxidized to thereby form the oxide film in an oxygen-nitrogen mixed atmosphere. Then the amount of oxygen supply was gradually increased to increase the oxygen concentration in the atmosphere.

The final flow rate of air supply was 1/25 with respect to the amount of N₂. In this case, the total amount of the gas introduced into the furnace was held substantially constant by controlling the flow rate of nitrogen. The gradual oxidation treatment was performed in an atmosphere maintained at about 80°C.

A final metal powder (with the surface oxide film) was obtained in the manner described above. The physical properties of the obtained magnetic metal powder and its bulk properties are shown in TABLE 2. Its volume resistivity is shown in TABLE 4, and the high-frequency characteristics of a compact using the magnetic metal powder are shown in TABLE 3. The composition of the magnetic metal powder and the conditions for the precursor reducing step and the gradual oxidizing step and also those for other Examples are shown in TABLE 1. As shown in TABLE 2, the axial ratio (= major axis length/minor axis length) of the obtained particles was 1.8.

### [Examples 3 to 5]

The same procedure as in Example 2 was repeated except that the mixing ratio of the 0.2 mol/L solution of yttrium sulfate (guaranteed reagent) in Example 2 was changed such that the amount of Y with respect to the total moles of Fe and Co was 1.7 at%, 0.9 at%, or 0.4 at%. The physical properties of the obtained soft magnetic metal powders and their bulk properties are shown in TABLE 2. Their volume resistivities are shown in TABLE 4, and the high-frequency characteristics of compacts using these soft magnetic metal powders are shown in TABLE 3. As shown in TABLE 2, the axial ratios ( = major axis length/minor axis length) of the particles in these Examples were 2.1, 2.4, and 2.6, respectively.

### [Comparative Example 1]

The same procedure as in Example 2 was repeated except that the mixing ratio of the 0.2 mol/L solution of yttrium sulfate (guaranteed reagent) in Example 2 was changed such that the amount of Y with respect to the total moles of Fe and Co was 4.3 at%. However, many unintended particles were generated in the precursor powder, so that a magnetic powder with a uniform axial ratio could not be obtained.

### [Comparative Example 2]

The precursor forming step was performed as follows. 3,000 mL of pure water and 100 mL of 12 mol/L sodium hydroxide were placed in a 5,000 mL beaker, and the mixture was stirred while temperature was maintained at 40°C using a thermostat. Then 900 mL of a solution prepared by mixing a 1 mol/L aqueous solution of ferrous sulfate (guaranteed reagent) and a 1 mol/L solution of cobalt sulfate (guaranteed reagent) at a mixing ratio of 4:1 and a 2 mol/L solution of ferric sulfate (guaranteed reagent) in such an amount that (Fe²⁺ + Co²⁺)/Fe³⁺ = 20 were added simultaneously to the above mixture.

Then temperature was increased to 90°C, and air was introduced at 200 mL/min to continue oxidation for 40 minutes. The air was changed to nitrogen, and the mixture was aged for 10 minutes. Then 80 mL of a 0.3 mol/L aluminum sulfate (guaranteed reagent) was added, and air was introduced at 200 mL/min to continue oxidation for 50 minutes, whereby the oxidation was completed. In this manner, particles of a precursor with Al forming a solid solution in Fe were obtained. The precursor was filtrated, washed with water, and dried at 110°C by routine methods to thereby obtain a dried solid of the precursor (also referred to as a precursor powder).

Next, the precursor reducing step was performed. The precursor powder with Co and Al forming a solid solution in Fe was placed in a bucket to which air could be introduced. The bucket was placed in a through-type reducing furnace, and reduction treatment was performed at 550°C for 60 minutes while hydrogen gas was introduced. After completion of the reduction treatment, a metal iron powder (magnetic metal powder) was obtained.

Then, in order to move to the gradual oxidizing step, the atmosphere in the furnace was changed from hydrogen to nitrogen, and the temperature inside the furnace was lowered to 80°C at a cooling rate of 20°C/min under the flow of nitrogen. In the gradual oxidizing step, a gas mixture of air and N₂ at a mixing ratio of air to N₂ of 1/125 was introduced into the furnace in the initial stage of formation of the oxide film so that the metal iron powder was not rapidly oxidized to thereby form the oxide film in an oxygen-nitrogen mixed atmosphere. Then the amount of oxygen supply was gradually increased to increase the oxygen concentration in the atmosphere.

The final flow rate of air supply was 1/25 with respect to the amount of N₂. In this case, the total amount of the gas introduced into the furnace was held substantially constant by controlling the flow rate of nitrogen. The gradual oxidation treatment was performed in an atmosphere maintained at about 80°C.

A final metal powder (with the surface oxide film) was obtained in the manner described above. The physical properties of the obtained magnetic metal powder and its bulk properties are shown in TABLE 2. Its volume resistivity is shown in TABLE 4, and the high-frequency characteristics of a compact using the magnetic metal powder are shown in TABLE 3. The composition of the magnetic metal powder and the conditions for the precursor reducing step and the gradual oxidizing step and also those for other Examples are shown in TABLE 1. As shown in TABLE 2, the axial ratio (= major axis length/minor axis length) of the obtained particles was 1.4. Specifically, magnetic particles having an axial ratio of less than 1.5 could be produced by producing a precursor powder including a solid solution containing Fe, Co, and Al using a precursor production method slightly different from those in Reference Example 1 and Examples 2 to 5 and then performing the same reducing step and gradual oxidizing step as those in Reference Example 1 and Examples 2 to 5.

The results in Reference Example 1 and Comparative Example 2 will be discussed. A comparison of the results of the values of tan δ shows that tan δ in Reference Example 1 was smaller than tan δ in Example 2 at all frequencies. Particularly, the values of tan δ in a high-frequency region were much lower than those in Comparative Example 2 and Examples 2 to 5 described later. The value of tan δ was 0.03 or less even at 5 GHz, and good high-frequency characteristics were obtained.

Here, tan δ is represented by the formula µ"/µ', and the numerator in the formula, i.e., µ", is generally known to be inversely proportional to the strength of magnetically anisotropic magnetic field. The magnetic anisotropy is influenced by the shape of the particles, and the anisotropy increases as the axial ratio increases. The axial ratio of the particles in Reference Example 1 is sufficiently larger than the axial ratio in Comparative Example 2. Therefore, the shape magnetic anisotropy caused by the shape is larger than that in the Comparative Example, and this may result in a reduction in the value of µ", so that tan δ (= µ"/µ') is reduced.

The values of volume resistivity shown in TABLE 4 were compared. For example, the values of volume resistivity under an applied load of 25 MPa were compared. The volume resistivity of the metal particle powder in Comparative Example 2 was outside the measurement range, i.e., 1 × 10⁴ Ω·cm or less. However, the metal particle powder in Reference Example 1 exhibited a very high volume resistivity of 5.8 × 10⁹. This high volume resistivity may also be because the value of tan δ of the metal particle powder in Reference Example 1 is much lower than that in Comparative Example 2.

The value of µ' was worse than that in Comparative Example 2. However, the value of µ' at frequencies of 1 GHz or higher was 1.5 or more. This shows that the value of µ' is sufficiently high for antenna applications etc.

Next, the results in Examples 2 to 5 and Comparative Example 2 will be discussed. A comparison of the results of the values of tan δ shows that tan δ in Examples 2 to 5 was sufficiently smaller than tan δ in the Comparative Example at all the frequencies. The results show that the difference in tan δ between the Examples and Comparative Example 2 increased as the frequency increased to 3 GHz and then 5 GHz in the high-frequency region and that tan δ was smaller in Examples in which the content of Y was smaller.

As described above, tan δ is represented by the formula µ"/µ', and the numerator in the formula, i.e., µ", is generally known to be inversely proportional to the strength of magnetically anisotropic magnetic field. The magnetic anisotropy is influenced by the shape of the particles, and the anisotropy increases as the axial ratio increases. The axial ratio of the particles in each of Examples 2 to 5 is larger than the axial ratio in Comparative Example 2. Therefore, the shape magnetic anisotropy caused by the shape is larger than that in the Comparative Example, and this may result in a reduction in the value of µ", so that tan δ (= µ_{"/}µ_{'}) is reduced.

The reason that tan δ is smaller in Examples in which the content of Y is smaller may be an increase in shape magnetic anisotropy caused by an increase in the axial ratio. The values of volume resistivity shown in TABLE 4 were compared. For example, the values of volume resistivity under an applied load of 25 MPa were compared. The volume resistivity of the metal particle powder in Comparative Example 2 was outside the measurement range, i.e., 1 × 10⁴ Ω·cm or less. However, the metal particle powders in Examples 2 to 5 exhibited a very high volume resistivity of 4.0 × 10⁵ or more. These high volume resistivity values may also be because the values of tan δ of the metal particle powders in Examples 2 to 5 are much lower than those in Comparative Example 2.

The results of comparison of the values of µ' show that the values of µ' of the metal particle powders in Examples 2 to 5 were worse than that in Comparative Example 2 but higher than those in Reference Example 1, and therefore much better high-frequency characteristics were obtained. µ' is generally known to be inversely proportional to the strength of magnetically anisotropic magnetic field. The axial ratio of the particles was larger in Examples in which the amount of Y added simultaneously with Fe was smaller. Therefore, the shape magnetic anisotropy caused by the shape is larger in Examples in which the amount of Y added simultaneously with Fe is smaller, and this may cause a reduction in the value of µ' inversely proportional to the strength of the magnetically anisotropic magnetic field.

As described above, tan δ can be reduced by reducing the amount of Y added simultaneously with Fe. However, if the amount of Y is excessively reduced, µ' is excessively reduced. Therefore, the amount of Y may be more preferably at least 0.2 at % or more.

As described in the above results, a good magnetic powder that can be used for high-frequency parts such as antennas and has low losses and high magnetic permeability could be obtained. In addition, a much better magnetic powder that has low losses and high magnetic permeability in a high-frequency region could be obtained by changing the amount of Y added before seed crystals are formed to change the amount of Y contained in the particles to thereby control the axial ratio of the particles. One feature of the metal powder of the present invention is that losses in a frequency region of GHz or higher are low. This means that losses in MHz and kHz ranges less than the GHz range are also low, and the metal powder can be used in a frequency region of kHz or higher.

### [Example 6]

The precursor forming step was performed as follows. 2,600 mL of pure water and 350 mL of an ammonium carbonate solution containing ammonium carbonate in an amount corresponding to 3 equivalents of carbonic acid with respect to Fe²⁺ were added to a 5,000 mL beaker, and the mixture was stirred while temperature was maintained at 40°C using a thermostat. Then 760 mL of a solution prepared by mixing a 0.2 mol/L solution of yttrium sulfate (guaranteed reagent) and 700 mL of a 1 mol/L aqueous solution of ferrous sulfate (guaranteed reagent) such that the amount of Y with respect to the amount of Fe was 2 at% was added to the above mixture.

Subsequently, the same procedure as in Reference Example 1 was repeated to obtain a magnetic metal powder containing no Co. The physical properties of the obtained magnetic metal powder and its bulk properties are shown in TABLE 2, and the high-frequency characteristics of a compact using the magnetic metal powder are shown in TABLE 3. As shown in TABLE 2, the axial ratio (= major axis length/minor axis length) of the obtained particles was 2.2.

### [Example 7]

The precursor forming step was performed as follows. 2,600 mL of pure water and 350 mL of an ammonium carbonate solution containing ammonium carbonate in an amount corresponding to 3 equivalents of carbonic acid with respect to Fe²⁺ were added to a 5,000 mL beaker, and the mixture was stirred while temperature was maintained at 40°C using a thermostat. Then 720 mL of a solution prepared by mixing a 1 mol/L aqueous solution of ferrous sulfate (guaranteed reagent) and a 1 mol/L solution of cobalt sulfate (guaranteed reagent) at a mixing ratio of 100:3 was mixed with a 0.2 mol/L solution of yttrium sulfate (guaranteed reagent) such that the amount of Y was 2 at% with respect to the total moles of Fe and Co. Then about 800 mL of the prepared solution was added to the above mixture.

Subsequently, the same procedure as in Reference Example 1 was repeated to obtain a magnetic metal powder. The physical properties of the obtained magnetic metal powder and its bulk properties are shown in TABLE 2, and the high-frequency characteristics of a compact using the magnetic metal powder are shown in TABLE 3. As shown in TABLE 2, the axial ratio (= major axis length/minor axis length) of the obtained particles was 2.1.

### [Example 8]

The precursor forming step was performed as follows. 2,600 mL of pure water and 350 mL of an ammonium carbonate solution containing ammonium carbonate in an amount corresponding to 3 equivalents of carbonic acid with respect to Fe²⁺ were added to a 5,000 mL beaker, and the mixture was stirred while temperature was maintained at 40°C using a thermostat. Then 850 mL of a solution prepared by mixing a 1 mol/L aqueous solution of ferrous sulfate (guaranteed reagent) and a 1 mol/L solution of cobalt sulfate (guaranteed reagent) at a mixing ratio of 100:30 was mixed with a 0.2 mol/L solution of yttrium sulfate (guaranteed reagent) such that the amount of Y was 2 at% with respect to the total moles of Fe and Co. Then about 1 L of the prepared solution was added to the above mixture.

Subsequently, the same procedure as in Reference Example 1 was repeated to obtain a magnetic metal powder. The physical properties of the obtained magnetic metal powder and its bulk properties are shown in TABLE 2, and the high-frequency characteristics of a compact using the magnetic metal powder are shown in TABLE 3. As shown in TABLE 2, the axial ratio (= major axis length/minor axis length) of the obtained particles was 1.7.

Next, Examples 6 to 8 will be discussed. A comparison between the results in Examples 7 and 8 in which Co was contained and the results in Example 6 in which no Co was contained shows that tan δ was smaller in Examples 7 and 8. This may be because of the following. When Co is contained, a denser oxide film can be formed. Therefore, the volume resistivity of the powder increases, and eddy current loss can be reduced. Specifically, it was found that when the powder contains Co, the effect of reducing tan δ is obtained.

The values of volume resistivity shown in TABLE 4 were compared. For example, the values of volume resistivity under an applied load of 25 MPa were compared. The volume resistivity of the metal particle powder in Comparative Example 2 was outside the measurement range, i.e., 1 × 10⁴ Ω.cm or less. However, the metal particle powders in Examples 6 to 8 exhibited a very high volume resistivity of 1.8 × 10⁶ or more. These high volume resistivity values may also be because the values of tan δ of the metal particle powders in Examples 6 to 8 are much lower than those in Comparative Example 2.

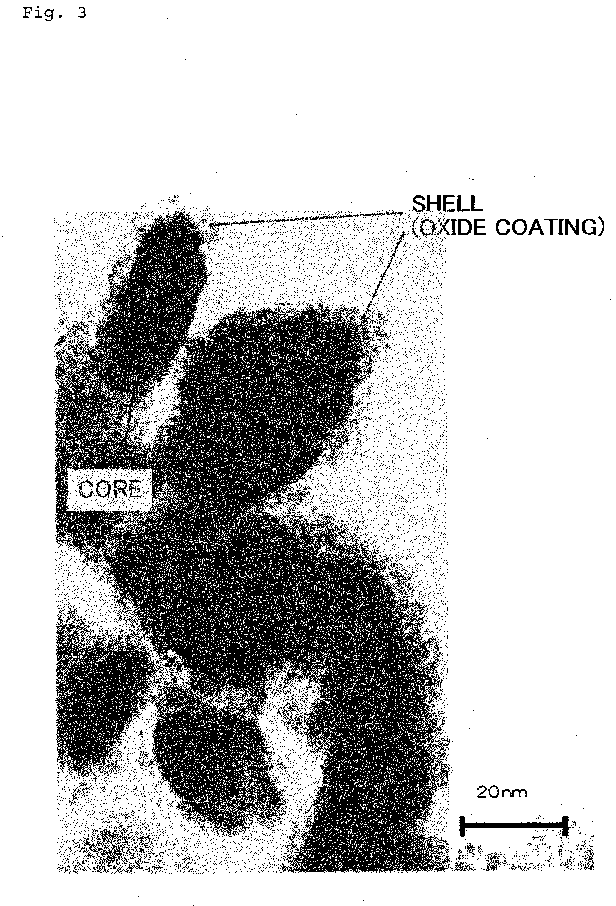

A TEM photograph of the powder obtained in Example 8 is shown in Fig. 3. This TEM image was taken at an acceleration voltage of 100 kV, and the contrast was adjusted such that core portions appeared black. Therefore, in Fig. 3 showing a confirmed example, dark spherical portions present in the central portions of substantially spherical particles and almost transparent portions surrounding the spherical portions are seen, and core portions and shell portions are found to be present. As can be seen from this photograph, the soft magnetic metal powder obtained in the present invention is composed of core portions formed of metals and shell portions formed of an oxide film.

### [Examples 9 and 10]

The same procedure as in Example 3 was repeated except that the amount added of the 0.3 mol/L solution of aluminum sulfate (guaranteed reagent) in Example 3 was changed such that the amount of Al with respect to the total moles of Fe and Co was 8.5 at% or 13 at%. The physical properties of the obtained magnetic metal powders and their bulk properties are shown in TABLE 2, and the high-frequency characteristics of compacts using the magnetic metal powders are shown in TABLE 3.

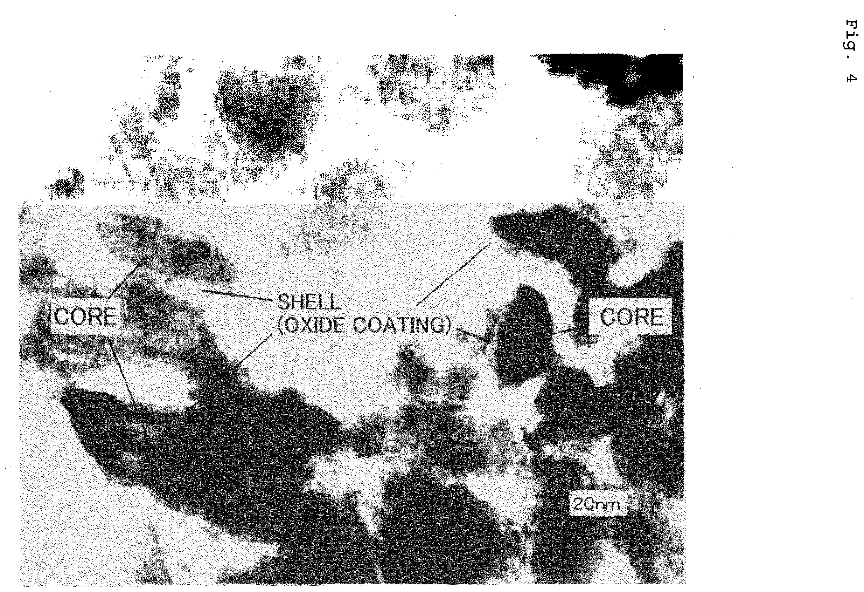

As shown in TABLE 1, the axial ratios (= major axis length/minor axis length) of the obtained particles were 2.1 and 1.9, respectively. A TEM photograph of the powder obtained in Example 9 is shown in Fig. 4. As can also be seen from this photograph, the soft magnetic metal powder obtained in the present invention has core portions formed of metals and shell portions formed of an oxide film.

Next, the results in Examples 3, 9, and 10 will be discussed. Even when the amount of Al contained is increased, µ' and tan δ were not changed largely. However, as the amount of Al increased, µ' decreased slightly. This may be because of the following. Since Al is non-magnetic, the amount of the non-magnetic component increases, and the saturation magnetization decreases, so that µ' becomes small.

The results also show that, when the amount of Al was larger, tan δ was large in a high-frequency region higher than 3 GHz, although the reason is not clear. As can be seen from the above results, if the amount of Al is too large, µ' and tan δ deteriorate. Therefore, the amount of Al may be preferably 15 at% or less.

The values of volume resistivity shown in TABLE 4 were compared. For example, the values of volume resistivity under an applied load of 25 MPa were compared. The volume resistivity of the metal particle powder in Comparative Example 2 was outside the measurement range, i.e., 1 × 10⁴ Ω.cm or less. However, the metal particle powders in Examples 3, 9, and 10 exhibited a very high volume resistivity of 6.4 × 10⁶ or more. These high volume resistivity values may also be because the values of tan δ of the metal particle powders in Examples 6 to 8 are much lower than those in Comparative Example 2.

**[TABLE 1]**

| | **PRECURSOR MANUFACTURING CONDITIONS** | | | | | | **DRY CONDITIONS** | | | | | |
|---|---|---|---|---|---|---|---|---|---|---|---|---|
| | **PRECURSOR MANUFACTURING CONDITIONS** | | **NON-MAGNETIC COMPONENT** | | | | **REDUCTION CONDITIONS** | | | **STABILIZATION (GRADUAL OXIDATION) CONDITIONS** | | |
| | Co | | Y | | Al | | REDUCTION TEMPERATURE | REDUCTION TIME | **REDUCTION SPECIES** | TEMPERATURE | IOOR* | LOER** |
| | **TYPE** | Co/Fe | **TYPE** | Y/(Fe+Co) | **TYPE** | Al/(Fe+Co) | | | | | | |
| | | **(ATOMIC RATIO)** | | **(ATOMIC RATIO)** | | **(ATOMIC RATIO)** | **°C** | min | | °C | **VOLUME RATIO** | **VOLUME RATIO** |
| EXAMPLE 1 | CoSO₄ | 0.3 | Y₂(SO₄)₃ | 0.05 | Al₂(SO₄)₃ | 0.05 | 550 | 60 | H₂ gas | 80 | 1/125 | 1/25 |
| EXAMPLE 2 | CoSO₄ | 0.2 | Y₂(SO₄)₃ | 0.026 | Al₂(SO₄)₃ | 0.05 | 550 | 60 | H₂ gas | 80 | 1/125 | 1/25 |
| FXAMPLE 3 | CoSO₄ | 0.2 | Y₂(SO₄)₃ | 0.017 | Al₂(SO₄)₃ | 0.05 | 550 | 60 | H₂ gas | 80 | 1/125 | 1/25 |
| EXAMPLE 4 | CoSO₄ | 0.2 | Y₂(SO₄)₃ | 0.009 | Al₂(SO₄)₃ | 0.05 | 550 | 60 | H₂ gas | 80 | 1/125 | 1/25 |
| EXAMPLE 5 | CoSO₄ | 0.2 | Y₂(SO₄)₃ | 0.004 | Al₂(SO₄)₃ | 0.05 | 550 | 60 | H₂ gas | 80 | 1/125 | 1/25 |
| EXAMPLE 6 | - | 0 | Y₂(SO₄)₃ | 0.02 | Al₂(SO₄)₃ | 0.05 | 550 | 60 | H₂ gas | 80 | 1/125 | 1/25 |
| EXAMPLE 7 | CoSO₄ | 0.03 | Y₂(SO₄)₃ | 0.02 | Al₂(SO₄)₃ | 0.05 | 550 | 60 | H₂ gas | 80 | 1/125 | 1/25 |
| EXAMPLES 8 | CoSO₄ | 0.3 | Y₂(SO₄)₃ | 0.02 | Al₂(SO₄)₃ | 0.05 | 550 | 60 | H₂ gas | 80 | 1/125 | 1/25 |
| EXAMPLES 9 | CoSO₄ | 0.2 | Y₂(SO₄)₃ | 0.017 | Al₂(SO₄)₃ | 0.085 | 550 | 60 | H₂ gas | 80 | 1/125 | 1/25 |
| EXAMPLE 10 | CoSO₄ | 0.2 | Y₂(SO₄)₃ | 0.017 | Al₂(SO₄)₃ | 0.13 | 550 | 60 | H₂ gas | 80 | 1/125 | 1/25 |
| COMPARATIVE EXAMPLE 1 | CoSO₄ | 0.2 | Y₂(SO₄)₃ | 0.043 | Al₂(SO₄)₃ | 0.05 | 550 | 60 | H₂ gas | 80 | 1/125 | 1/25 |
| COMPARATIVE EXAMPLE 2 | CoSO₄ | 0.2 | Y₂(SO₄)₃ | 0 | Al₂(SO₄)₃ | 0.05 | 550 | 60 | H₂ gas | 80 | 1/125 | 1/25 |

| | | | | | | | | | | | | |
|---|---|---|---|---|---|---|---|---|---|---|---|---|
| *IOER : INITIAL OXYGEN ABUNDANCERATIO **LOER : FINAL OXYGEN ABUNDANCE RATIO | | | | | | | | | | | | |

**[TABLE 2]**

| | COMPOSITION OF PRECURSOR | | | MAJOR AXIS LENGTH | MINOR AXIS LENGTH | AXIAL RATIO | BULK PROPERTIES | | | | | | |
|---|---|---|---|---|---|---|---|---|---|---|---|---|---|
| | Co/Fe | Y/(Fe+Co) | Al/(Fe+Co) | | | | BET | TAP | Hc | σs | SQ | b.SFD | Δσs |
| | (at%) | (at%) | (at%) | (nm) | (nm) | | (m²/g) | (g/cm³) | (kA/m) | (Am²/kg) | - | - | - |
| EXAMPLE 1 | 29.0 | 4.7 | 4.8 | 94.0 | 18.2 | 5.2 | 47.2 | 0.58 | 188.8 | 154 | 0.52 | 1.04 | 11.5 |
| EXAMPLE 2 | 19.2 | 2.6 | 5.1 | 32.0 | 17.6 | 1.8 | 56.4 | 0.94 | 69.4 | 133 | 0.40 | 2.67 | 13.6 |
| EXAMPLE 3 | 19.6 | 1.8 | 5.1 | 41.3 | 19.5 | 2.1 | 50.8 | 0.88 | 83.5 | 141 | 0.43 | 2.37 | 11.7 |
| EXAMPLE 4 | 19.2 | 0.9 | 5.1 | 51.1 | 21.0 | 2.4 | 46.5 | 0.87 | 101.4 | 147 | 0.46 | 2.01 | 9.8 |
| EXAMPLE 5 | 19.5 | 0.5 | 5.0 | 58.4 | 22.1 | 2.6 | 44.3 | 0.79 | 112.0 | 152 | 0.47 | 1.85 | 9.1 |
| EXAMPLE 6 | 0 | 2.2 | 6.1 | 41.3 | 19.5 | 2.1 | 44.8 | 0.89 | 57.7 | 128 | 0.34 | 3.11 | 20.8 |
| EXAMPLE 7 | 3.0 | 2.1 | 5.6 | 36.5 | 21.0 | 1.7 | 45.3 | 0.93 | 58.1 | 132 | 0.35 | 2.97 | 15.4 |
| EXAMPLE 8 | 29.3 | 1.7 | 4.7 | 37.2 | 18.7 | 2.0 | 51.9 | 0.89 | 94.1 | 143 | 0.45 | 2.24 | 9.6 |
| EXAMPLE 9 | 19.0 | 1.8 | 8.5 | 35.9 | 16.9 | 2.1 | 59.1 | 0.90 | 76.2 | 134 | 0.42 | 2.56 | 10.9 |
| EXAMPLE 10 | 20.1 | 1.8 | 12.7 | 32.9 | 17.5 | 1.9 | 71.9 | 0.84 | 72.4 | 128 | 0.41 | 2.69 | 9.0 |
| COMPARATIVE EXAMPLE 1 | UNABLE TO PRODUCE | | | | | | | | | | | | |
| COMPARATIVE EXAMPLE 2 | 19.2 | 0 | 5.6 | 49.3 | 35.3 | 1.4 | 28.2 | 1.12 | 51.2 | 174 | 0.32 | 3.18 | 7.1 |

**[TABLE 3]**

| | RATIO OF MAGNETIC POWDER | RATIO OF RESIN | 1 GHz | | | 2 GHz | | | 3 GHz | | | 5 GHz | | |
|---|---|---|---|---|---|---|---|---|---|---|---|---|---|---|
| | wt% | wt% | µ' | µ'' | tanδ | µ' | µ" | tanδ | µ' | µ" | tanδ | µ' | µ' | tanδ |
| EXAMPLE 1 | 80 | 20 | 1.59 | 0.011 | 0.007 | 1.60 | 0.009 | 0.005 | 1.63 | 0 | 0 | 1.72 | 0.041 | 0.024 |
| EXAMPLE 2 | 80 | 20 | 2.03 | 0 | 0 | 2.06 | 0.022 | 0.010 | 2.16 | 0.036 | 0.017 | 2.40 | 0.371 | 0.154 |
| EXAMPLE 3 | 80 | 20 | 1.92 | 0.002 | 0.001 | 1.96 | 0 | 0 | 2.04 | 0.008 | 0.004 | 2.27 | 0.239 | 0.105 |
| EXAMPLE 4 | 80 | 20 | 1.87 | 0 | 0 | 1.90 | 0 | 0 | 1.97 | 0 | 0 | 2.15 | 0.162 | 0.075 |
| EXAMPLE 5 | 80 | 20 | 1.85 | 0 | 0 | 1.88 | 0 | 0 | 1.94 | 0 | 0 | 2.10 | 0.146 | 0.070 |
| EXAMPLE 6 | 80 | 20 | 1.96 | 0.029 | 0.015 | 2.00 | 0.049 | 0.024 | 2.09 | 0.113 | 0.054 | 2.23 | 0.464 | 0.208 |
| EXAMPLE 7 | 80 | 20 | 1.94 | 0.015 | 0.008 | 1.98 | 0.041 | 0.021 | 2.07 | 0.096 | 0.046 | 2.23 | 0.452 | 0.203 |
| EXAMPLE 8 | 80 | 20 | 1.93 | 0.003 | 0.001 | 1.97 | 0.013 | 0.006 | 2.04 | 0.033 | 0.016 | 2.23 | 0.235 | 0.105 |
| EXAMPLE 9 | 80 | 20 | 1.96 | 0.043 | 0.022 | 1.98 | 0.040 | 0.020 | 2.06 | 0.061 | 0.030 | 2.28 | 0.297 | 0.130 |
| EXAMPLE 10 | 80 | 20 | 1.91 | 0.022 | 0.012 | 1.94 | 0.032 | 0.017 | 2.03 | 0.074 | 0.037 | 2.21 | 0.365 | 0.165 |
| COMPARATIVE EXAMPLE 1 | UNABLE TO PRODUCE | | | | | | | | | | | | | |
| COMPARATIVE EXAMPLE 2 | 80 | 20 | 2.95 | 0.078 | 0.026 | 2.96 | 0.505 | 0.170 | 2.78 | 0.738 | 0.266 | 2.48 | 1.097 | 0.442 |

**[TABLE 4]**

| | | VOLUME RESISTIVITY (Ω-cm) | | | | |
|---|---|---|---|---|---|---|
| | LOAD (kN) | 4 | 8 | 12 | 16 | 20 |
| | LOAD (MPa) | 13 | 25 | 38 | 51 | 64 |
| EXAMPLE 1 | | 1.5×10¹⁰ | 5.8×10⁹ | 1.6×10⁹ | 4.5×10⁸ | 1.3×10⁸ |
| EXAMPLE 2 | | 7.4×10⁸ | 5.5×10⁷ | 1.0×10⁷ | 2.9×10⁶ | 1.1×10⁶ |
| EXAMPLE 3 | | 1.0×10⁸ | 6.4×10⁶ | 1.2×10⁶ | 3.5×10⁵ | UNDER RANGE |
| EXAMPLE 4 | | 2.6×10⁷ | 1.5×10⁶ | 2.6×10⁵ | UNDER RANGE | UNDER RANGE |
| EXAMPLE 5 | | 5.6×10⁶ | 4.0×10⁵ | UNDER RANGE | UNDER RANGE | UNDER RANGE |
| EXAMPLE 6 | | 1.3×10⁷ | 1.8×10⁶ | 4.4×10⁵ | UNDER RANGE | UNDER RANGE |
| EXAMPLE 7 | | 4.0×10⁷ | 3.9×10⁶ | 8.0×10⁵ | 3.1×10⁵ | UNDER RANGE |
| EXAMPLE 8 | | 2.6×10⁸ | 1.4×10⁷ | 2.2×10⁶ | 5.7×10⁵ | 2.3×10⁵ |
| EXAMPLE 9 | | 8.2×10⁹ | 7.6×10⁸ | 1.5×10⁸ | 4.2×10⁷ | 1.5×10⁷ |
| EXAMPLE 10 | | 3.2×10¹⁰ | 1.4×10¹⁰ | 5.0×10⁹ | 1.8×10⁹ | 7.7×10⁸ |
| COMPARATIVE EXAMPLE 1 | | UNABLE TO PRODUCE | | | | |
| COMPARATIVE EXAMPLE 2 | | 4.2×10⁵ | UNDER RANGE | UNDER RANGE | UNDER RANGE | UNDER RANGE |

The metal powder of the present invention can be used not only for inductors and antennas but also for soft-magnetic applications such as magnetic heads, under layer materials of magnetic recording mediums, iron cores of electromagnets, cores of transformers, antennas, electromagnetic shielding materials, and electromagnetic wave absorbers.

### Reference Signs List

- 1: conductor plate
- 2: feeding point
- 3: shorting plate
- 4: emission plate
- 5: compact
- 6: electrode
- 7: flange
- 8: winding
- 9: core
- 10: antenna
- 11: coil part

## Claims

1. A metal powder comprising iron as a main component and manufactured by a method comprising:
a precursor forming step of adding an aqueous solution of at least one of aluminum, silicon, rare earth elements including Y, and magnesium to a solution containing iron ions and a rare earth element ion including Y after air is blown into the solution containing iron ions and the rare earth element ion including Y,
wherein the air was introduced until 50% of Fe²⁺ was oxidized, to thereby form a precursor containing the at least one of aluminum, silicon, rare earth elements including Y, and magnesium;
a precursor reducing step of reducing the precursor to obtain a metal powder; and
a gradual oxidizing step of reacting oxygen with the metal powder obtained in the precursor reducing step to form an oxide film on a surface of the metal powder,
wherein:
the metal powder has an average particle diameter of 32.0 nm or more and 58.4 nm or less,
an axial ratio = a major axis length / a minor axis length of 1.7 or more and 2.6 or less,
a coercive force Hc of 57.7 to 112.0 kA/m (725 to 1407 Oe),
a saturation magnetization of 128 Am²/kg or more and 152 Am²/kg or less, and
a volume resistivity of 4.0 × 10⁵ Ω.cm or more and 1.4 × 10¹⁰ Ω.cm or less, the volume resistivity being measured by a dual-ring electrode method according to JIS-K6911 while 1.0 g of the metal powder is pressurized vertically at 25 MPa with a voltage of 10 V applied to the metal powder,
wherein the metal powder has a core-shell structure, the core-shell structure having a core containing iron or an iron-cobalt alloy and a shell containing a composite oxide including at least one of iron, cobalt, aluminum, silicon, rare earth elements including Y, and magnesium,
wherein an atomic ratio of cobalt to iron in the iron-cobalt alloy is Co/Fe = 0.0 to 0.6,
wherein the metal powder comprises aluminum with an atomic ratio of aluminum to the total amount of Fe and Co being Al/(a sum total of Fe and Co) = 0.01 to 0.30,
wherein the content of the rare earth element including Y with respect to the total amount of Fe and Co is within the range of 10 at% or less, and
wherein when a mixture of the metal powder and an epoxy resin at a mass ratio of 80:20 is prepared and then subjected to compression molding, the compression molded mixture satisfies µ' > 1.5, µ" < 0.05, and tan δ < 0.05 at a frequency of 1 GHz, satisfies µ' > 1.5, µ" < 0.15, and tan δ < 0.1 at a frequency of 3 GHz, and satisfies µ' > 1.5, µ" < 0.5, and tan δ < 0.3 at a frequency of 5 GHz, where µ' is a real part of the complex magnetic permeability of the compression molded mixture, µ" is an imaginary part thereof, and tan δ is a loss factor = µ"/µ'.

2. The metal powder according to claim 1, having a TAP density of 0.5 g/cm³ or more and 1.5 g/cm³ or less.

3. Use of the metal powder according to claim 1 or 2 for forming an inductor.

4. Use of the metal powder according to claim 1 or 2 for forming an antenna.

## Patentansprüche

1. Metallpulver, umfassend Eisen als eine Hauptkomponente und hergestellt durch ein Verfahren, umfassend:
einen Vorläuferbildungsschritt des Hinzufügens einer wässrigen Lösung von mindestens einem von Aluminium, Silicium, Seltenerdelementen, einschließend Y, und Magnesium zu einer Lösung, enthaltend Eisenionen und ein Seltenerdelemention, einschließend Y, nachdem Luft in die Lösung, die Eisenionen und das Seltenerdelemention, einschließend Y, enthält, eingeblasen wurde, wobei die Luft eingeleitet wurde, bis 50% von Fe²⁺ oxidiert waren, um dadurch einen Vorläufer zu bilden, der mindestens eines von Aluminium, Silicium, Seltenerdelementen, einschließend Y, und Magnesium enthält;
einen Vorläuferreduktionsschritt des Reduzierens des Vorläufers, um ein Metallpulver zu erhalten; und
einen schrittweisen Oxidationsschritt des Umsetzens von Sauerstoff mit dem Metallpulver, erhalten in dem Vorläuferreduktionsschritt, um einen Oxidfilm auf einer Oberfläche des Metallpulvers zu bilden,
wobei:
das Metallpulver einen durchschnittlichen Teilchendurchmesser von 32,0 nm oder mehr und 58,4 nm oder weniger,
ein Axialverhältnis = eine Hauptachsenlänge / eine Nebenachsenlänge von 1,7 oder mehr und 2,6 oder weniger,
eine Koerzitivkraft Hc von 57,7 bis 112,0 kA/m (725 bis 1407 Oe),
eine Sättigungsmagnetisierung von 128 Am²/kg oder mehr und 152 Am²/kg oder weniger, und
einen spezifischen Volumenwiderstand von 4,0 x 10⁵ Ω·cm oder mehr und 1,4 x 10¹⁰ Ω·cm oder weniger aufweist, wobei der spezifische Volumenwiderstand durch ein Doppelringelektrodenverfahren gemäß JIS-K6911 gemessen wird, während 1,0 g des Metallpulvers vertikal bei 25 MPa mit einer an das Metallpulver angelegten Spannung von 10 V unter Druck gesetzt ist,
wobei das Metallpulver eine Kern-Schale-Struktur aufweist, wobei die Kern-Schale-Struktur einen Kern, enthaltend Eisen oder eine Eisen-Cobalt-Legierung, und eine Schale, enthaltend ein Kompositoxid, einschließend mindestens eines von Eisen, Cobalt, Aluminium, Silicium, Seltenerdelementen, einschließend Y, und Magnesium, aufweist,
wobei ein Atomverhältnis von Cobalt zu Eisen in der Eisen-Cobalt-Legierung Co/Fe = 0,0 bis 0,6 beträgt,
wobei das Metallpulver Aluminium mit einem Atomverhältnis von Aluminium zu der Gesamtmenge von Fe und Co, entsprechend Al/(eine Gesamtsumme von Fe und Co), = 0,01 bis 0,30 umfasst,
wobei der Gehalt des Seltenerdelements, einschließend Y, in Bezug zu der Gesamtmenge von Fe und Co in dem Bereich von 10 Atom-% oder weniger liegt, und
wobei, wenn ein Gemisch des Metallpulvers und eines Epoxidharzes mit einem Massenverhältnis von 80:20 dargestellt und dann Kompressionsformen unterzogen wird, das kompressionsgeformte Gemisch µ' > 1,5, µ" < 0,05 und tan δ < 0,05 bei einer Frequenz von 1 GHz erfüllt, µ' > 1,5, µ" < 0,15 und tan δ < 0,1 bei einer Frequenz von 3 GHz erfüllt, und µ' > 1,5, µ" < 0,5 und tan δ < 0,3 bei einer Frequenz von 5 GHz erfüllt, wobei µ' ein Realteil der komplexen magnetischen Permeabilität des kompressionsgeformten Gemisches ist, µ" ein Imaginärteil davon ist und tan δ ein Verlustfaktor = µ"/µ' ist.

2. Metallpulver nach Anspruch 1, das eine TAP-Dichte von 0,5 g/cm³ oder mehr und 1,5 g/cm³ oder weniger aufweist.

3. Verwendung des Metallpulvers nach Anspruch 1 oder 2 zum Bilden eines Induktors.

4. Verwendung des Metallpulvers nach Anspruch 1 oder 2 zum Bilden einer Antenne.

## Revendications

1. Poudre métallique comprenant du fer comme composant principal et fabriquée par un procédé comprenant:
une étape de formation d'un précurseur où l'on ajoute une solution aqueuse d'au moins l'un de l'aluminium, du silicium, des éléments des terres rares y compris l'Y, et du magnésium à une solution contenant des ions de fer et un ion des éléments des terres rares comprenant du Y après que de l'air a été insufflé dans la solution contenant des ions de fer et un ion des éléments des terres rares y compris l'Y, dans laquelle l'air a été introduit jusqu'à ce que 50% de Fe²⁺ soit oxydé, pour ainsi former un précurseur contenant le au moins un parmi l'aluminium, le silicium, des éléments des terres rares y compris du Y, et le magnésium;
une étape de réduction du précurseur où l'on réduit le précurseur pour obtenir une poudre de métal; et
une étape d'oxydation graduelle où l'on fait réagir l'oxygène avec la poudre de métal obtenue à l'étape de réduction du précurseur pour former un film d'oxyde à la surface de la poudre de métal,
dans laquelle:
la poudre de métal présente un diamètre particulaire moyen de 32,0 nm ou plus et de 58,4 nm ou moins,
un rapport axial = longueur de grand axe/longueur petit axe de 1,7 ou plus et de 2,6 ou moins,
une force coercitive Hc de 57,7 à 112,0 kA/m (725 à 1407 Oe),
une aimantation à saturation de 128 Am²/kg ou plus et de 152 Am²/kg ou moins, et une résistivité transversale de 4,0 x 10⁵ Ω•cm ou plus et de 1,4 x 10¹⁰ Ω•cm ou moins, la résistivité transversale étant mesurée par une méthode d'électrode à deux anneaux selon la norme JIS-K6911 tandis qu'1,0 g de la poudre de métal est mise sous pression verticale à 25 MPa à une tension de 10 V appliquée à la poudre de métal,
dans laquelle la poudre de métal présente une structure cœur-enveloppe, cette structure cœur-enveloppe ayant un cœur contenant du fer ou un alliage de fer-cobalt et une enveloppe contenant un oxyde composite comprenant au moins l'un du fer, du cobalt, de l'aluminium, du silicium, des éléments des terres rares y compris l'Y, et du magnésium,
dans laquelle le rapport atomique du cobalt au fer dans cet alliage fer-cobalt est Co/Fe = 0,0 à 0,6,
dans laquelle la poudre de métal comprend de l'aluminium avec un rapport atomique de l'aluminium à la quantité totale de Fe et de Co de Al/(une somme totale de Fe et de Co) = 0,01 à 0,30,
dans laquelle la teneur en élément des terres rares y compris l'Y par rapport à la quantité totale de Fe et de Co est comprise dans l'intervalle de 10 at% ou moins, et
dans laquelle quand un mélange de la poudre de métal et d'une résine époxy à un rapport massique de 80:20 est préparé puis soumis à un moulage par compression, le mélange moulé par compression satisfait à µ' > 1,5, µ" < 0,05, et tan δ < 0,05 à une fréquence de 1 GHz, satisfait à µ' > 1,5, µ" < 0,15, et tan δ < 0,1 à une fréquence de 3 GHz, et satisfait à µ' > 1,5, µ" < 0,5, et tan δ < 0,3 à une fréquence de 5 GHz, où µ' est une partie réelle de la perméabilité magnétique complexe du mélange moulé par compression, µ" est une partie imaginaire de celle-ci, et tan δ est un facteur de perte = µ"/µ'.

2. Poudre de métal selon la revendication 1, ayant une densité TAP de 0,5 g/cm³ ou plus et de 1,5 g/cm³ ou moins.

3. Utilisation de la poudre de métal selon la revendication 1 ou 2 pour former un inducteur.

4. Utilisation de la poudre de métal selon la revendication 1 ou 2 pour former une antenne.
